# EUROPEAN PATENT APPLICATION

(11) **EP 3 399 750 A1**
(43) Date of publication of application: **07.11.2018**
(21) Application number: 16881463.0
(22) Date of filing: 05.07.2016
(51) Int. Cl.: H04N 19/33, H04N 19/63

(54) **MOVING IMAGE DECODING DEVICE, MOVING IMAGE DECODING METHOD, MOVING IMAGE ENCODING DEVICE, MOVING IMAGE ENCODING METHOD, AND COMPUTER-READABLE RECORDING MEDIUM**

(30) Priority: 28.12.2015 JP 2015256489
(71) Applicant: KDDI Corporation, Tokyo 160-8003 (JP)
(72) Inventor: KAWAMURA, Kei, Fujimino-shi, Saitama 356-8502, (JP); NAITO, Sei, Fujimino-shi, Saitama 356-8502, (JP)
(74) Representative: Pitchford, James Edward
(86) International application number: PCT/JP2016/069873
(87) International publication number: WO 2017/115483

(57) **Abstract**

A moving image decoding apparatus comprises a decoding unit that entropy-decodes a bitstream corresponding to, out of a low-frequency component and a high-frequency component obtained as a result of non-redundantly transforming a block of a difference signal between an image and a prediction image into frequency components, the low-frequency component; an inverse-quantization/inverse-transformation unit that inverse-quantizes and inverse-transforms a level value obtained as a result of the entropy-decoding in the decoding unit, and generates the low-frequency component; and an addition unit that generates a block of a low-resolution image whose resolution is lower than the resolution of the image, from a block of the low-frequency component generated by the inverse-quantization/inverse-transformation unit and a corresponding block of a prediction image.

## Description

### TECHNICAL FIELD

The present invention is related to a moving image decoding apparatus, a moving image decoding method, a moving image encoding apparatus, a moving image encoding method, and a computer-readable storage medium.

### BACKGROUND ART

A moving image coding scheme that uses intra-prediction (intra-frame prediction), inter-prediction (inter-frame prediction), residual difference transformation, and entropy encoding has been proposed (for example, refer to NPTL1). Also, a magnification method for an encoding apparatus/decoding apparatus called a scalable encoding scheme has been proposed (for example, refer to NPTL1).

In recent years, high-resolution video such as 4K video and 8K video has come to be distributed. 4K video is being distributed at 15 Mbps to 35 Mbps in video distribution services. Meanwhile, 8K video broadcasting services are envisioned to be at 90 Mbps to 110 Mbps. With HD video (2K video) thus far, it has been possible to realize a practical quality at about 3 Mbps to 6 Mbps by HEVC (High Efficiency Video Coding).

When such video is envisioned to be streamed and stored, ten times or more the capacity is required for 4K/8K video over 2K video. In particular, since there is a storage cost in individually storing 4K video and 8K video, there is great benefit in reducing capacity by scalable encoding techniques such as is described in NPTL1.

### CITATION LIST

### NON-PATENT LITERATURE

NPTL1: ITU-T H.265 High Efficiency Video Coding.
NPTL2: ITU-T T.800 Information technology - JPEG 2000 image coding system: Core coding system.

### SUMMARY OF INVENTION

### TECHNICAL PROBLEM

However, in conventional HEVC scalable encoding/decoding techniques, encoding apparatus and decoding apparatus configurations have multiple loops, and so the amount of processing is large.

The present invention is made in light of such a problem, and it has as an object to provide a technique by which it is possible to suppress an increase in processing amount in an encoding apparatus or a decoding apparatus while realizing scalability.

### SOLUTION TO PROBLEM

An aspect of the present invention is related to a moving image decoding apparatus. A moving image decoding apparatus comprises a decoding unit that entropy-decodes a bitstream corresponding to, out of a low-frequency component and a high-frequency component obtained as a result of non-redundantly transforming a block of a difference signal between an image and a prediction image into frequency components, the low-frequency component; an inverse-quantization/inverse-transformation unit that inverse-quantizes and inverse-transforms a level value obtained as a result of the entropy-decoding in the decoding unit, and generates the low-frequency component; and an addition unit that generates a block of a low-resolution image whose resolution is lower than the resolution of the image, from a block of the low-frequency component generated by the inverse-quantization/inverse-transformation unit and a corresponding block of a prediction image.

Another aspect of the present invention is a moving image encoding apparatus. A moving image encoding apparatus comprises an analysis unit that non-redundantly transforms a block of a difference signal between an image and a prediction image into frequency components; a transformation/quantization unit that, out of a low-frequency component and a high-frequency component obtained as a result of the transforming by the analysis unit, transforms and quantizes the low-frequency component, and generates a level value; and an encoding unit that entropy encodes the level value generated by the transformation/quantization unit, and generates a bitstream.

Additionally, any combination of the above configuration elements and substitutes for the configuration elements and expressions of the present invention between an apparatus, a method, a system, a computer program, a storage medium storing a computer program or the like may be embodiments of the present invention.

### ADVANTAGEOUS EFFECTS OF INVENTION

By virtue of the present invention, it is possible to suppress the increase in processing amount in an encoding apparatus or a decoding apparatus while realizing scalability. Further features and advantages of the present invention will become apparent from the following description with reference to the attached drawings.

### BRIEF DESCRIPTION OF DRAWINGS

[FIG. 1] A schematic diagram illustrating a configuration of a distribution system according to an embodiment.
[FIG. 2] A block diagram illustrating functions and configurations of a moving image encoding apparatus of FIG. 1.
[FIG. 3] A view for describing a discrete wavelet transform of a difference signal of a processing target block.
[FIG. 4] A schematic diagram illustrating an example of a structure of a bitstream and an accompanying bitstream.
[FIG. 5] A block diagram illustrating functions and configurations of the moving image decoding apparatus of FIG. 1.
[FIG. 6] An explanatory drawing illustrating and image of a sequence of processes on an encoding side and on a decoding side.
[FIG. 7] A flowchart illustrating a sequence of processes in the moving image encoding apparatus of FIG. 1.
[FIG. 8] A flowchart illustrating a sequence of processes in the moving image decoding apparatus of FIG. 1.
[FIG. 9] A block diagram illustrating functions and configurations of a scalable encoding apparatus according to a comparative example.
[FIG. 10] A block diagram illustrating functions and configurations of a scalable decoding apparatus according to a comparative example.

### DESCRIPTION OF EMBODIMENTS

Hereinafter, the same reference numerals are given in the drawings to configuration elements, members, processes, and signals that are the same or equivalent, and duplicate descriptions are omitted as appropriate. Also, portions of components that are not important to the description are abbreviated in the drawings.

In embodiments, a quadtree structure in H.265 or ISO/IEC 23008-2 HEVC is used, and by using a feature of having a syntax level scalability function corresponding to 1/2 resolution, a high quality scalability function in relation to a difference (residual) signal, for which function is lacking, is added. The difference signal is divided by a filter bank into a low-frequency component and a high-frequency component. Here, by using a non-redundant filter bank, the number of samples is kept uniform. Transformation/quantization and inverse-quantization/inverse-transformation are applied to each obtained component. Also, by synthesizing decoded components by using a filter bank, it is possible to restore an original resolution difference signal. In a case of using only a low-frequency component without application of synthesis by a filter bank, it is possible to decode video of a lower resolution with an HEVC-compliant decoder. As a result of this, by adding the filter bank to an encoding loop/decoding loop, it is possible to generate a stream of low-resolution video that can be decoded by HEVC from the stream alone.

Additionally, the change in resolution is not limited to 1/2, and generally it may be 2⁽⁻ⁿ⁾ (n is a natural number). Also, a bitstream corresponding to a high-frequency component added to the bitstream corresponding to a low-frequency component is referred to as an accompanying bitstream (accompanying bitstream). Also, the accompanying bitstream is referred to as such since it accompanies the bitstream, but it may also be referred to as a supplementary bitstream (supplementary bitstream, complementary bitstream) as something that supplements the bitstream, and what is added to the bitstream may be referred to as an additional bitstream (additional bitstream).

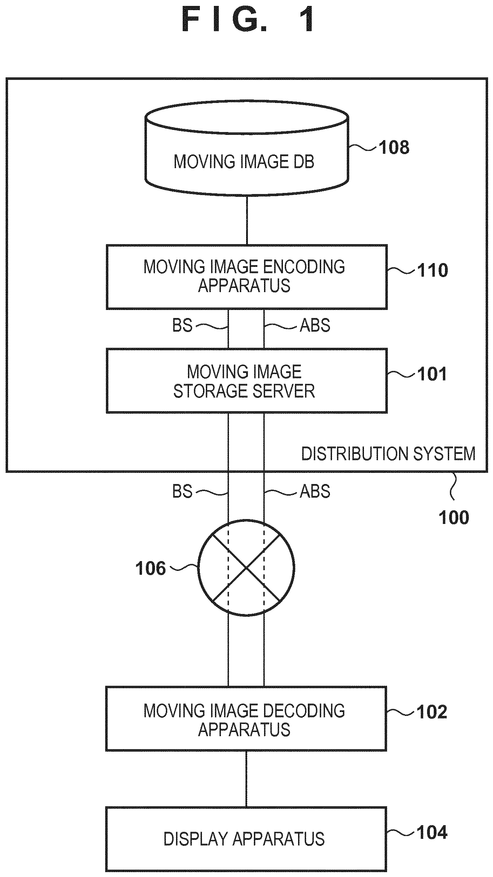

FIG. 1 is a schematic diagram illustrating a configuration of a distribution system 100 according to an embodiment. The distribution system 100 is a system that is used in a video distribution service that distributes high-resolution video such as 4K video or 8K video. A video distribution service may be VOD (Video On Demand), for example. The distribution system 100 is connected, via a network 106 such as the Internet, to a moving image decoding apparatus 102 such as a set-top box or a personal computer that is installed at a user site. The moving image decoding apparatus 102 is connected to a display apparatus 104 such as a television receiver or a monitor.

Note that the distribution system in the video distribution service is only one example, and it will be clear to a person having ordinary skill in the art who has come into contact with the present specification that it is possible to apply the technical concept according to the present embodiment to any system or service that includes a moving image encoder or decoder.

The distribution system 100 receives via the network 106, from a user, a designation of moving image content that he or she wishes to view. The distribution system 100 encodes data of designated moving image content, and generates a bitstream BS and an accompanying bitstream ABS. The distribution system 100 transmits the generated bitstream BS and accompanying bitstream ABS via the network 106 to the moving image decoding apparatus 102 of a request source user. The moving image decoding apparatus 102 decodes the received bitstream BS and accompanying bitstream ABS, generates moving image data, and transmits it to the display apparatus 104. The display apparatus 104 processes the received moving image data, and outputs the designated moving image content.

The distribution system 100 comprises a moving image DB (database) 108, a moving image encoding apparatus 110, and a moving image storage server 101. The moving image DB 108 holds data of a moving image such as 4K video or 8K video. The moving image encoding apparatus 110 obtains from the moving image DB 108 moving image data that corresponds to the designated moving image content, encodes the obtained moving image data, and generates a bitstream BS and an accompanying bitstream ABS that accompanies it. The bitstream BS corresponds to moving image data whose resolution is 1/2 the resolution of the original moving image data. The bitstream BS can be decoded by a decoder that is compliant with HEVC. Meanwhile, the accompanying bitstream ABS holds information for complementing or supplementing the bitstream BS. For example, the accompanying bitstream ABS corresponds to only a high-frequency component which is a difference between low-resolution video and high-resolution video. When the bitstream BS and the accompanying bitstream ABS are combined and decoded, the original high-resolution moving image data is reproduced. It is not possible to decode only the accompanying bitstream ABS by an HEVC-compliant decoder. The moving image storage server 101 stores the bitstream BS and the accompanying bitstream ABS generated by the moving image encoding apparatus 110.

Hereinafter, description will be given of a case in which the resolution of the moving image data that is obtained from the moving image DB 108 and inputted into the moving image encoding apparatus 110 is 8K, and the resolution of moving image data corresponding to the bitstream BS is 4K, specifically a case in which the resolution is made to be 1/2. It will be obvious to a person having ordinary skill in the art who comes into contact with the present specification how to extend the configuration described in the present embodiment to the case where the resolution is made to be 2⁽⁻ⁿ⁾.

A user, when designating moving image content that he or she desires to view, designates a resolution to the moving image decoding apparatus 102 considering the display capabilities of the display apparatus 104 or the like. The moving image decoding apparatus 102 obtains the designated resolution. The moving image decoding apparatus 102 generates/outputs moving image data from only the bitstream BS if the obtained resolution is 4K, and generates/outputs moving image data from the bitstream BS and the accompanying bitstream ABS if the obtained resolution is 8K.

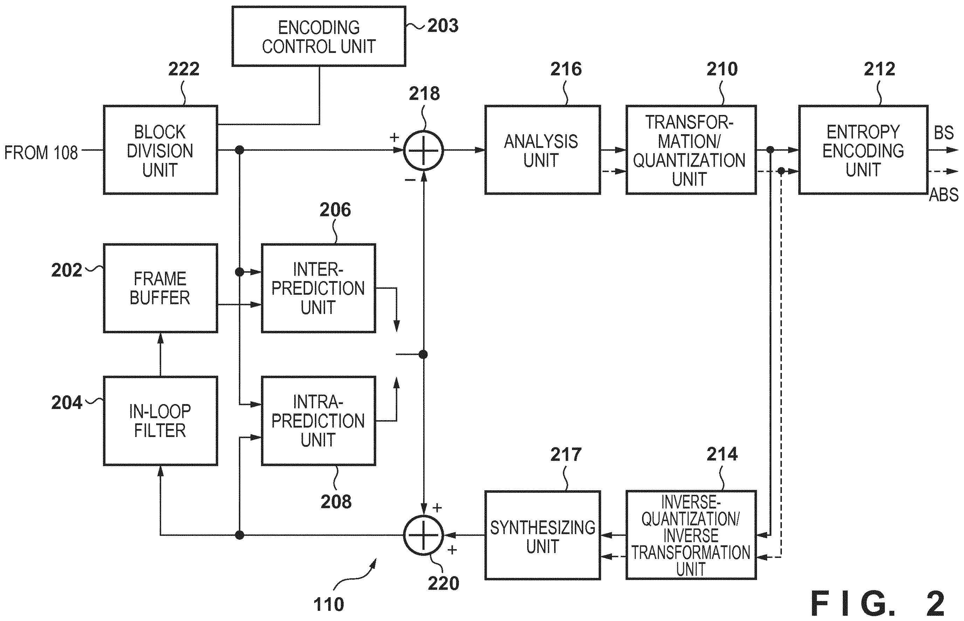

FIG. 2 is a block diagram illustrating functions and configurations of the moving image encoding apparatus 110 of FIG. 1. Each block illustrated here can be implemented in hardware with elements such as a CPU of a computer and mechanical apparatuses, or implemented in software by a computer program or the like, but here functional blocks realized by cooperation therebetween are illustrated. Accordingly, a person having ordinary skill in the art who has come into contact with the present specification will understand that these functional blocks can be realized in various forms by combining hardware and software. The computer program that realizes the moving image encoding apparatus 110 may be stored in a non-transitory computer-readable storage medium or may be distributed via a network.

The moving image encoding apparatus 110 comprises a frame buffer 202, an encoding control unit 203, an in-loop filter 204, an inter-prediction unit 206, an intra-prediction unit 208, a transformation/quantization unit 210, an entropy encoding unit 212, an inverse-quantization/inverse-transformation unit 214, an analysis unit 216, a synthesizing unit 217, a subtraction unit 218, an addition unit 220, and a block division unit 222.

The block division unit 222 divides an image to be encoded which includes moving image data from the moving image DB 108, specifically a frame, into a plurality of blocks. There are various sizes of blocks, and the plurality of blocks have a quadtree structure. Division into image blocks in the block division unit 222 conforms to HEVC division into image blocks. Specifically, the size of the CTU (Coding Tree Unit) whose processing size is largest is 64×64, and there are the sizes 32×32, 16×16, and 8×8 which result from repeatedly dividing this into four. The block division unit 222 outputs a processing target block to the subtraction unit 218, the inter-prediction unit 206, and the intra-prediction unit 208.

Image data of a previous frame is inputted into the inter-prediction unit 206 from the frame buffer 202. The inter-prediction unit 206, based on the previous frame, outputs a prediction block for the processing target block in accordance with inter-frame prediction. Image data of a block that is already processed of the same frame as the processing target frame is inputted into the intra-prediction unit 208 from the addition unit 220. The intra-prediction unit 208, based on another block of the same frame as the processing target block, outputs a prediction block of the processing target block. Either the output of the inter-prediction unit 206 or the output of the intra-prediction unit 208 is outputted to the subtraction unit 218 depending on whether inter-frame prediction is applied or intra-frame prediction is applied to the processing target block.

The subtraction unit 218 generates a difference (residual) signal for between the block unit encoding target image and the intra-prediction image or the inter-prediction image. The subtraction unit 218 outputs a difference signal that indicates a difference between a processing target block and a corresponding prediction block that the inter-prediction unit 206 or the intra-prediction unit 208 outputted.

The analysis unit 216 transforms a difference signal of a processing target block outputted by the subtraction unit 218 into a frequency component non-redundantly. The frequency component obtained by non-redundant transformation processing in the analysis unit 216 is further divided into a low-frequency component and a high-frequency component. The analysis unit 216 outputs to the transformation/quantization unit 210 a low-frequency component and a high-frequency component obtained as a result of the transformation. In FIG. 2, solid lines represent a low-frequency component, and dashed lines represent a high-frequency component.

The analysis unit 216 includes a filter bank for generating a low-frequency component and a high-frequency component from a difference signal of the processing target block. The non-redundant transformation in the analysis unit 216 is, for example, a discrete wavelet transform. In the case where the resolution of the moving image data corresponding to the bitstream BS is made to be 2^{(-m)} (m is a natural number) of the original resolution, the low-frequency component is an LL component obtained as the result of performing m band divisions on the difference signal of the processing target block.

A wavelet transform is generally known as a method for realizing spatial scalability in a coding scheme for still images rather than moving images (for example, refer to NPTL2). Spatial scalability is described using JPEG 2000 as an example. In JPEG 2000, using a non-redundant transformation base called a wavelet (Wavelet), an image is decomposed into a high-frequency component and a low-frequency component. With respect to the low-frequency component, decomposition is applied repeatedly. Obtained coefficients are quantized, and transformed into a bit plane, and entropy encoding is performed in a procedure called bit plane coding. If only the stream configuring the low-frequency component is decoded, a low-resolution image is obtained. Also, if the high-frequency component is decoded as well, a high-resolution image is obtained.

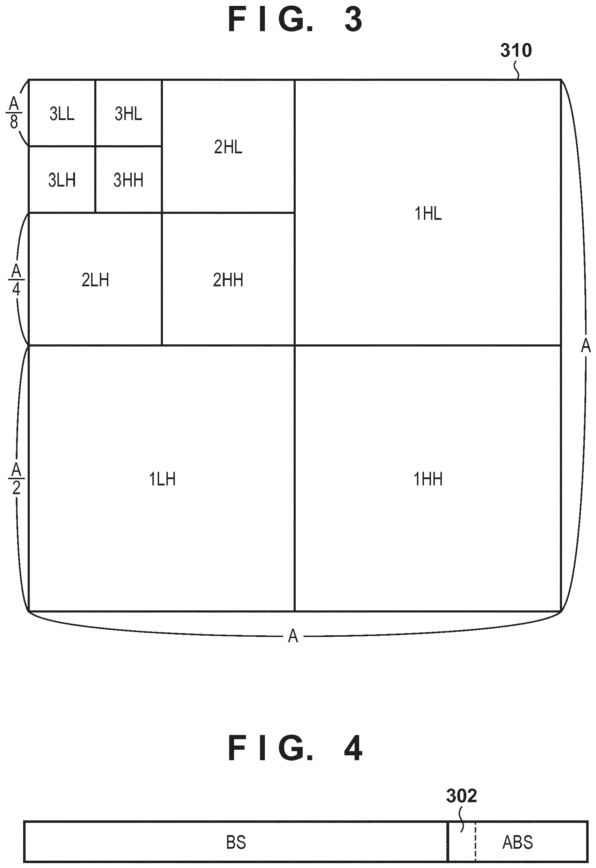

FIG. 3 is a view for describing a discrete wavelet transform of a difference signal of a processing target block 310. In a discrete wavelet transform in the analysis unit 216, a low-pass filter and a high-pass filter are applied in order of a vertical direction and a horizontal direction of the processing target block 310, a difference signal is band divided into a low-frequency component L and a high-frequency component H, and wavelet coefficients are generated. In one horizontal/vertical low frequency band/high frequency combination according to a single band division, a division into wavelet coefficients of 4 bands of LL, LH, HL, and HH is made. Then, band division is applied recursively with respect to LL, which is a low frequency band, both horizontally and vertically. The result of this is that wavelet coefficients are hierarchized in the frequency domain. By division by 2 according to frequency for each of the horizontal direction and the vertical direction being performed in relation to LL, the four bands - LL, LH, HL, and HH - are further generated within LL. The number of times that band division is performed represents the number of layers in the wavelet transform. A band that is produced by band division is denoted dXY. d is the layer number, X represents the low-frequency component L or the high-frequency component H in the horizontal direction, and Y represents the low-frequency component L or the high-frequency component H in the vertical direction. In FIG. 3, a state in which three band divisions were performed with respect to the processing target block 310 is illustrated. For example, when the size A of the processing target block 310 is made to be 32 (32×32) pixels, the size of a 1LH component is A/2=16(16×16), the size of a 2LH component is A/4=8(8×8), and the size of a 3LL component is A/8=4(4×4). Note that in this embodiment, because a case in which the resolution of moving image data corresponding to the bitstream BS is 1/2 of the original (m=1) is described, band division is performed one time, and the ILL component obtained as the result thereof is outputted from the analysis unit 216 as the low-frequency component, and the 1LH component, the 1HL component, and the 1HH component are outputted from the analysis unit 216 as the high-frequency component.

Returning to FIG. 2, the transformation/quantization unit 210 transforms (for example, an orthogonal transformation) and quantizes the low-frequency component that is outputted from the analysis unit 216, and generates first level values. The transformation/quantization unit 210 transforms and quantizes the high-frequency component that is outputted from the analysis unit 216, and generates second level values different to the first level values. The transformation/quantization unit 210 outputs the generated first level values and second level values to the entropy encoding unit 212 and the inverse-quantization/inverse-transformation unit 214.

The entropy encoding unit 212 entropy encodes the first level values generated by the transformation/quantization unit 210 and side information (not shown) and generates a bitstream BS. Note that the side information is information required for reconstruction of pixel values that is used in the decoding apparatus, and includes related information such as a prediction mode indicating whether intra-prediction or inter-prediction was used, motion vectors, quantization parameters, and block size. The entropy encoding unit 212 entropy encodes the second level values generated by the transformation/quantization unit 210 and generates an accompanying bitstream ABS. The bitstream BS corresponds to a low-resolution video whose resolution is 4K, and the accompanying bitstream ABS which accompanies the bitstream BS corresponds to a difference between the original 8K high-resolution video and the low-resolution video.

The inverse-quantization/inverse-transformation unit 214 performs processing that is the inverse of processing in the transformation/quantization unit 210, and generates a low-frequency component and a high-frequency component. The inverse-quantization/inverse-transformation unit 214 inverse-quantizes and inverse-transforms the first level values outputted by the transformation/quantization unit 210, and generates a low-frequency component. The inverse-quantization/inverse-transformation unit 214 inverse-quantizes and inverse-transforms the second level values outputted by the transformation/quantization unit 210, and generates a high-frequency component.

The synthesizing unit 217 performs processing that is the inverse of processing in the analysis unit 216, and generates (reproduces) a difference signal of a processing target block. The synthesizing unit 217 synthesizes the low-frequency component and the high-frequency component generated by the inverse-quantization/inverse-transformation unit 214. The synthesizing unit 217 includes a filter bank for generating a difference signal of a processing target block from the low-frequency component and the high-frequency component by an inverse transformation of the non-redundant transformation in the analysis unit 216. In the case where the non-redundant transformation in the analysis unit 216 is a discrete wavelet transform, an inverse discrete wavelet transform is performed in the synthesizing unit 217.

The addition unit 220 adds the difference signal that the synthesizing unit 217 outputs and the prediction block that the inter-prediction unit 206 or the intra-prediction unit 208 outputs, generates the processing target block, and outputs it to the intra-prediction unit 208 and the in-loop filter 204. When the in-loop filter 204 receives all blocks of one frame, it generates a locally-decoded image corresponding to the frame, and outputs it to the frame buffer 202. This locally-decoded image is used in inter-frame prediction in the inter-prediction unit 206.

The encoding control unit 203 controls the block division unit 222 so as to satisfy the minimum transformation block size prepared for the transformation/quantization unit 210. The encoding control unit 203 controls block division in the block division unit 222 so that the size of the low-frequency component outputted from the analysis unit 216 does not fall below the minimum size (4×4) of the transformation block (Transform block). Since the processing target block in the analysis unit 216 is band-divided one time, if the size of the processing target block is the minimum size, the size of the low-frequency component after band division will fall below the minimum size. Accordingly, the encoding control unit 203 restricts or prohibits generation of a minimum size transformation block in the block division unit 222. The result of this is that the size of the processing target block inputted into the analysis unit 216 is 8×8 or more, and a block of a minimum size (4×4) will not be included.

FIG. 4 is a schematic diagram illustrating an example of a structure of a bitstream BS and an accompanying bitstream ABS. The accompanying bitstream ABS accompanies the bitstream BS. The accompanying bitstream ABS may have a header 302 for identifying the accompanying bitstream ABS. The moving image encoding apparatus 110 may output the bitstream BS and the accompanying bitstream ABS together as one bitstream.

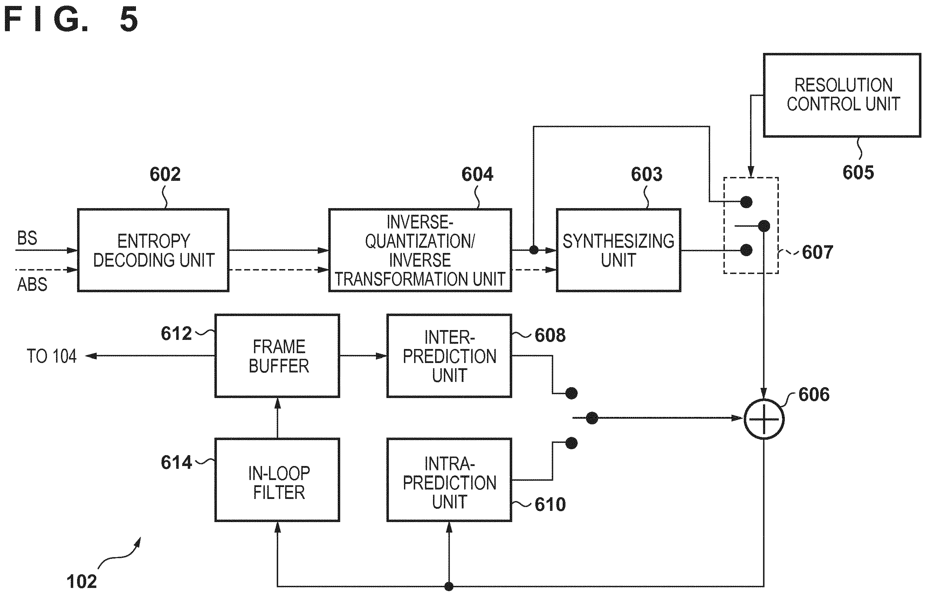

FIG. 5 is a block diagram illustrating functions and configurations of the moving image decoding apparatus 102 of FIG. 1. Each block illustrated here can be implemented in hardware with elements such as a CPU of a computer and mechanical apparatuses, or implemented in software by a computer program or the like, but here functional blocks realized by cooperation therebetween are illustrated. Accordingly, a person having ordinary skill in the art who has come into contact with the present specification will understand that these functional blocks can be realized in various forms by combining hardware and software. A computer program that realizes the moving image decoding apparatus 102 may be stored in a non-transitory computer-readable storage medium or may be distributed via a network.

The moving image decoding apparatus 102 comprises an entropy decoding unit 602, a synthesizing unit 603, an inverse-quantization/inverse-transformation unit 604, a resolution control unit 605, an addition unit 606, a selection unit 607, an inter-prediction unit 608, an intra-prediction unit 610, a frame buffer 612, and an in-loop filter 614. The moving image decoding apparatus 102, by a procedure that is the inverse to the procedure performed by the moving image encoding apparatus 110, obtains output moving image data from the bitstream BS or a combination of the bitstream BS and the accompanying bitstream ABS.

The entropy decoding unit 602 receives the bitstream BS and the accompanying bitstream ABS from the distribution system 100 via the network 106. The entropy decoding unit 602 entropy-decodes the received bitstream BS, and generates first level values and side information. Note that the processing for obtaining the side information and the first level values from the bitstream BS is referred to as parse (parse) processing. Reconstruction of the pixel values by using the side information and the first level values thus obtained is referred to as decoding processing. The entropy decoding unit 602 entropy-decodes the received accompanying bitstream ABS, and generates the second level value.

The inverse-quantization/inverse-transformation unit 604, for each block, inverse-quantizes and inverse-transforms the first level values generated by the entropy decoding unit 602, and generates a low-frequency component. The inverse-quantization/inverse-transformation unit 604, for each block, inverse-quantizes and inverse-transforms the second level values generated by the entropy decoding unit 602, and generates a high-frequency component. The inverse-quantization/inverse-transformation unit 604, for each block, outputs to the synthesizing unit 603 and the selection unit 607 a generated low-frequency component, and outputs to the synthesizing unit 603 a generated high-frequency component. As described above, the low-frequency component corresponds to 4K moving image data.

The synthesizing unit 603 synthesizes, for each block, the low-frequency component and the high-frequency component generated by the inverse-quantization/inverse-transformation unit 604. The synthesizing unit 603 includes a filter bank for generating a difference signal block from the low-frequency component and the high-frequency component by inverse transform of the non-redundant transformation in the analysis unit 216. A difference signal block generated in this way is a block of 8K moving image data. In the case where the non-redundant transformation in the analysis unit 216 is a discrete wavelet transform, an inverse discrete wavelet transform is performed in the synthesizing unit 603. By an action of the encoding control unit 203 of the moving image encoding apparatus 110, the size of the blocks of the difference signal generated by the synthesizing unit 603 is 8×8 or more, and minimum size (4×4) blocks are not included. The synthesizing unit 603 outputs a generated difference signal block to the selection unit 607.

The selection unit 607 selects one out of the block (4K) from the inverse-quantization/inverse-transformation unit 604 and the block (8K) from the synthesizing unit 603, and outputs the selected block to the addition unit 606.

The resolution control unit 605 controls the selection unit 607. The resolution control unit 605 controls the selection unit 607 so that a block of moving image data of the designated resolution (4K or 8K) is outputted from the selection unit 607. For example, the resolution control unit 605, if the designated resolution is 8K, causes the selection unit 607 to select a block from the synthesizing unit 603, and if the designated resolution is 4K, causes it to select a block from the inverse-quantization/inverse-transformation unit 604. As a result of this, the selection unit 607, when there is a request from a user that, out of 8K and 4K, the lower of the two - the 4K resolution - is desired, selects a block (4K) from the inverse-quantization/inverse-transformation unit 604, and when there is a request from the user that the original resolution (8K) is desired, a block (8K) from the synthesizing unit 603 is selected.

The addition unit 606, in accordance with whether the block outputted from the selection unit 607 is intra-predicted or inter-predicted, adds a difference signal between a prediction image for the block, which is outputted by either the inter-prediction unit 608 or the intra-prediction unit 610, and the block, and reproduces the block. The addition unit 606 outputs the reproduced block to the intra-prediction unit 610 and the in-loop filter 614. In the case where the selection unit 607 selects a block (4K) from the inverse-quantization/inverse-transformation unit 604, the addition unit 606 generates a low-resolution image block of a resolution (4K), which is lower than the original resolution (8K), from the block (4K) from the inverse-quantization/inverse-transformation unit 604 and the corresponding block of the prediction image. In the case where the selection unit 607 selects a block (8K) from the synthesizing unit 603, the addition unit 606 generates an 8K image block from the block (8K) from the synthesizing unit 603 and the corresponding block of the prediction image.

By using the reproduced block, the intra-prediction unit 610 performs intra-frame prediction and generates an intra-prediction image. The in-loop filter 614 is, for example, a de-blocking filter. When the in-loop filter 614 receives all blocks in one frame, it generates a locally-decoded image corresponding to the frame, and outputs it to the frame buffer 612. The locally-decoded image is used in inter-frame prediction in the inter-prediction unit 608 and simultaneously outputted to the display apparatus 104 as output moving image data.

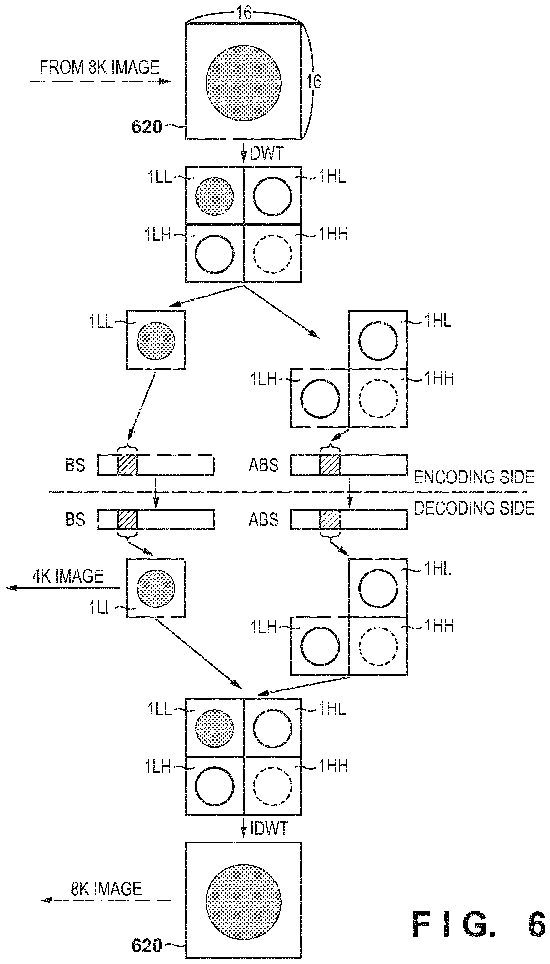

Operation of the moving image encoding apparatus 110 and the moving image decoding apparatus 102 according to the above configuration is described. FIG. 6 is an explanatory drawing illustrating and image of a sequence of processes on an encoding side and on a decoding side. On the encoding side, a block 620 (16×16) of a difference signal between the 8K image to be processed and the prediction image is inputted into the analysis unit 216 from the subtraction unit 218. In the analysis unit 216, a discrete wavelet transform (Discrete Wavelet Transform, DWT) is performed in relation to the block 620, and one band division is performed. The result of this is that the block 620 is divided into the 1LL component, the 1LH component, the 1HL component, and the 1HH component. In the transformation/quantization unit 210 and the entropy encoding unit 212, the 1LL component is transformed, quantized, and encoded, and is included in the bitstream BS, and transmitted to the decoding side. In the transformation/quantization unit 210 and the entropy encoding unit 212, the 1HL component, the 1LH component, and the 1HH component are transformed, quantized, and encoded, and included in the accompanying bitstream ABS, and transmitted to the decoding side.

On the decoding side, the bitstream BS and the accompanying bitstream ABS are received. In the entropy decoding unit 602 and the inverse-quantization/inverse-transformation unit 604, the bitstream BS is decoded, inverse-quantized, and inverse-transformed, and the 1LL component is reproduced. In the entropy decoding unit 602 and the inverse-quantization/inverse-transformation unit 604, the accompanying bitstream ABS is decoded, inverse-quantized, and inverse-transformed, and the 1LH component, the 1HL component, and the 1HH component are reproduced. In the case where 4K is designated as the resolution, the reproduced 1LL component is used as a block of a 4K image difference signal.

In the synthesizing unit 603, the reproduced 1LL component and the reproduced 1LH component, 1HL component, and 1HH component are synthesized, and the original difference signal block 620 is reproduced by an inverse discrete wavelet transform (Inverse DWT, IDWT). In the case where 8K is designated as the resolution, the block 620 thus reproduced is used.

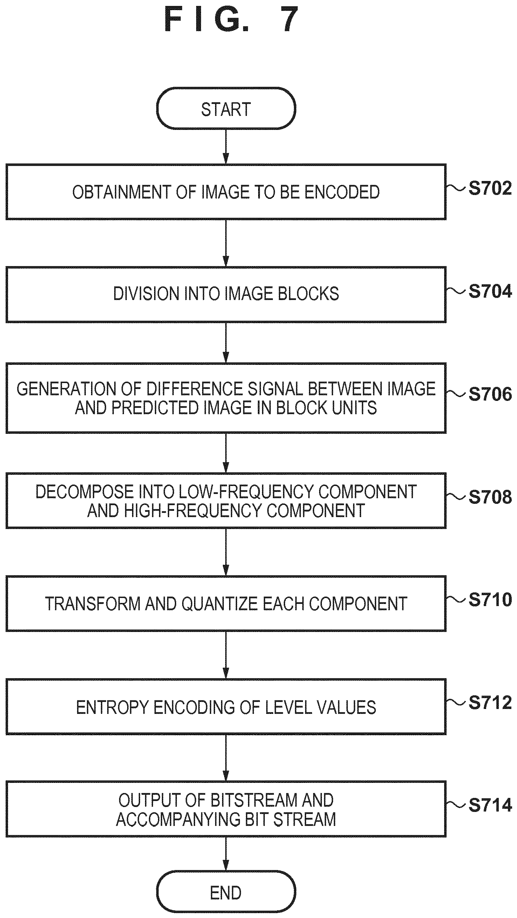

FIG. 7 is a flowchart illustrating a sequence of processes in the moving image encoding apparatus 110. The moving image encoding apparatus 110 obtains an image to be encoded (step S702). The moving image encoding apparatus 110 divides the obtained image to be encoded into a plurality of blocks (step S704). The moving image encoding apparatus 110 computes a difference between the image to be encoded and a prediction image in divided block units, and generates a difference signal (step S706). The moving image encoding apparatus 110, in block units, decomposes the difference signal into a low-frequency component and a high-frequency component (step S708). The moving image encoding apparatus 110, after having performed an orthogonal transformation on each of the low-frequency and high-frequency components, performs quantization based on a predetermined quantization parameter (step S710). The moving image encoding apparatus 110 entropy encodes each of the first level values originating in the low-frequency component obtained as the result of quantization and the second level values originating in the high-frequency component, and generates the bitstream BS and the accompanying bitstream ABS (step S712). The moving image encoding apparatus 110 outputs the generated bitstream BS and accompanying bitstream ABS (step S714).

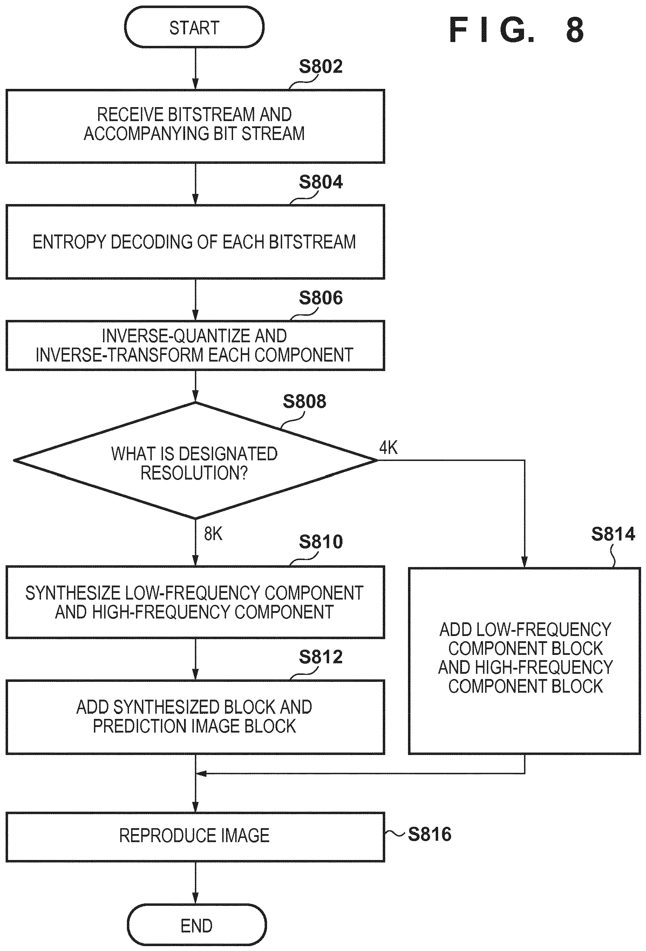

FIG. 8 is a flowchart illustrating a sequence of processes in the moving image decoding apparatus 102. The moving image decoding apparatus 102 receives the bitstream BS and accompanying bitstream ABS (step S802) via the network 106. The moving image decoding apparatus 102 entropy-decodes the bitstream BS and generates the first level values, and entropy-decodes the accompanying bitstream ABS and generates the second level values (step S804). The moving image decoding apparatus 102 inverse-quantizes and inverse-transforms the first level values and the second level values, and generates a low-frequency component and a high-frequency component (step S806). In the case where the designated resolution is 8K ("8K" in step S808), the moving image decoding apparatus 102 synthesizes the low-frequency component and the high-frequency component, and generates a difference signal synthesized block (step S810). The moving image decoding apparatus 102 adds the synthesized block and the corresponding block of the prediction image (step S812). The moving image decoding apparatus 102 collects the addition results and reproduces the 8K image (step S816). In the case where the designated resolution is 4K ("4K" in step S808), the moving image decoding apparatus 102 adds a block comprising the low-frequency component and the corresponding block of the prediction image (step S814). The moving image decoding apparatus 102 collects the addition results and reproduces the 4K image (step S816).

By virtue of the distribution system 100 according to the present embodiment, a scalable encoding/decoding scheme that reduces the processing amount in signal processing can be realized. For example, on the encoding side, by the action of the analysis unit 216 provided in the encoding loop, the bitstream BS by which it is possible to reproduce 4K video by decoding and the accompanying bitstream ABS which is used in combination with the bitstream BS to reproduce the 8K video are generated. By this, it ceases to be necessary to provide an encoding loop for each of 8K video and 4K video separately. On the decoding side, by the action of the synthesizing unit 603 provided within the decoding loop, 4K video decoding that uses the bitstream BS and 8K video decoding that uses the bitstream BS and the accompanying bitstream ABS is realized in a single decoding loop. By this, it ceases to be necessary to provide a decoding loop for each of 8K video and 4K video separately.

Effects of the present embodiment will be described with reference to a comparative example. The comparative example is related to a scalable encoding scheme (for example, refer to NPTL1). This is a method of encoding/decoding a base video called a base layer and an extension video for which an extension portion called an enhancement layer is added to the base video and various elements are extended. As the various elements, there is a frame rate, a resolution, a bit depth, a color gamut, or the like. The comparative example relates to spatial scalability which is scalability of resolution in particular.

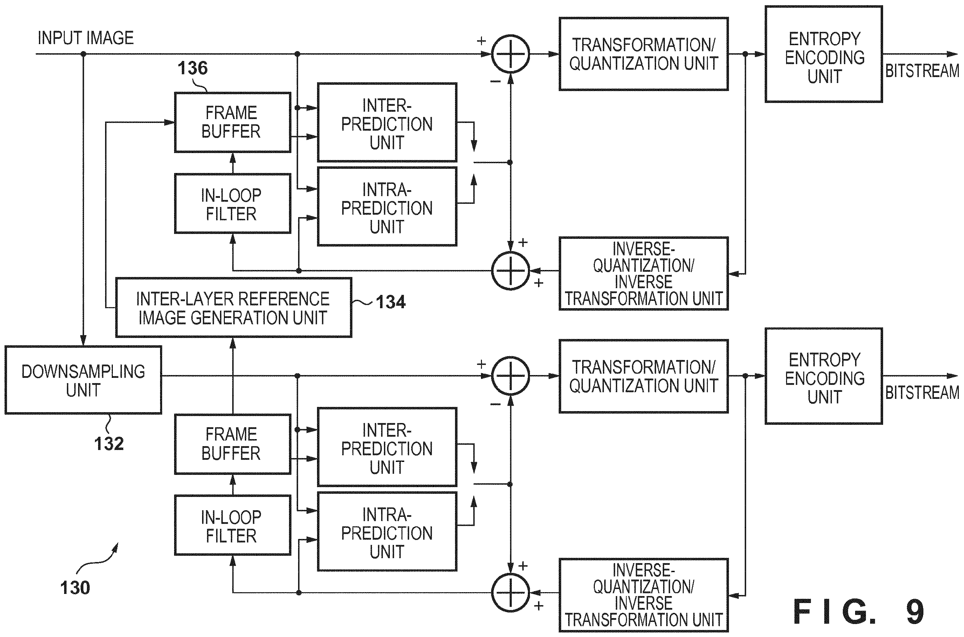

FIG. 9 is a block diagram illustrating functions and configurations of a scalable encoding apparatus 130 according to a comparative example. A downsampling unit 132 takes an input image as input, and outputs an image whose resolution is made to be 1/2. A video whose resolution is 1/2 is encoded similarly to in a normal encoding apparatus. An inter-layer reference image generation unit 134 takes a decoded image as input, and outputs a 2-times enlarged image to a frame buffer 136. The result of this is that it is possible to use a base layer image as the reference image in enhancement layer encoding, and encoding efficiency is improved over individually encoding each.

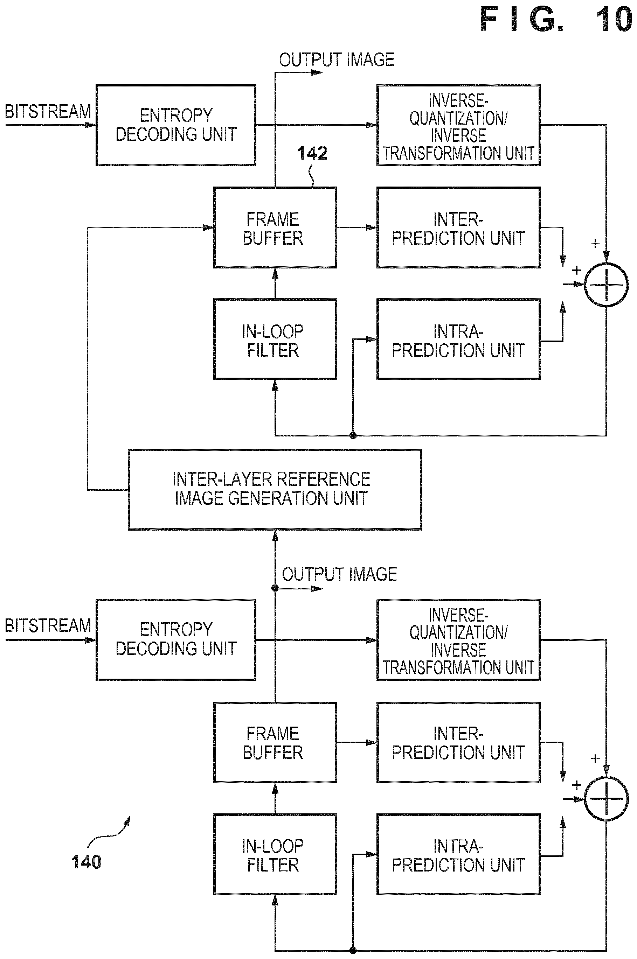

FIG. 10 is a block diagram illustrating functions and configurations of a scalable decoding apparatus 140 according to a comparative example. The case of decoding only the base layer is the same as with a conventional decoding apparatus. Meanwhile, when decoding until an enhancement layer, an inter-layer prediction image is added to a reference image buffer 142 of the enhancement layer.

As is clear from the circuit configurations illustrated in FIG. 9 and FIG. 10, in the scalable encoding/decoding scheme according to the comparative example, a plurality of encoding loops/decoding loops (for example, for low resolution and for high resolution) are needed. Accordingly, the memory bandwidth and processing amount needed for signal processing increases in proportion to the sum total of the number of pixels of all layers. In contrast to this, in the method according to the present embodiment, by respectively providing an analysis unit in the encoding loop and a synthesizing unit in the decoding loop, it becomes possible to encode/decode both high-resolution video and low-resolution video in a single loop apparatus, and it is possible to reduce memory bandwidth and the processing amount. Also, power consumption can be reduced.

Examples of the database in the above-described embodiment are a hard disk and a semiconductor memory. Also, based on the description in the present specification, a person having ordinary skill in the art who has come into contact with the present specification will understand that it is possible to implement each unit by a CPU that is not shown graphically, a module of an application program that is installed, a module of a system program, a semiconductor memory that temporarily stores contents of data read out from a hard disk, or the like.

This concludes the description of the configuration and operation of the distribution system 100 according to the embodiment. A person having ordinary skill in the art will understand that the embodiment is only an example, and different variations are possible in each combination of the configuration elements and the processes, and that such variations are within the scope of the present invention.

In embodiments, description was given for a case in which the accompanying bitstream ABS is generated on the encoding side, and the accompanying bitstream ABS is transmitted to the decoding side via the network 106, but there is no limitation to this. For example, configuration may be take such that the distribution system 100 accepts via the network 106 a designation of a desired resolution from the decoding side, and in the case where the designated resolution is low (4K), the accompanying bitstream ABS is not transmitted. In such a case, the moving image decoding apparatus 102 receives only the bitstream BS, and therefore the synthesizing processing in the synthesizing unit 603 is avoided.

Note, the present invention is not limited to the embodiment described above, and it is possible to make various modifications or changes without straying from the spirit and scope of the present invention. Accordingly, the following claims are attached to make public the scope of the present invention.

This application claims priority based on Japanese Patent Application No. 2015-256489 filed December 28, 2015, and all of the recited content thereof is referenced herein.

## Claims

1. A moving image decoding apparatus, comprising:
a decoding unit that entropy-decodes a bitstream corresponding to, out of a low-frequency component and a high-frequency component obtained as a result of non-redundantly transforming a block of a difference signal between an image and a prediction image into frequency components, the low-frequency component;
an inverse-quantization/inverse-transformation unit that inverse-quantizes and inverse-transforms a level value obtained as a result of the entropy-decoding in the decoding unit, and generates the low-frequency component; and
an addition unit that generates a block of a low-resolution image whose resolution is lower than the resolution of the image, from a block of the low-frequency component generated by the inverse-quantization/inverse-transformation unit and a corresponding block of a prediction image.

2. The moving image decoding apparatus according to claim 1, wherein
the decoding unit entropy-decodes an accompanying bitstream corresponding to the high-frequency component, and
the inverse-quantization/inverse-transformation unit inverse-quantizes and inverse-transforms a different level value obtained as a result of the entropy-decoding of the accompanying bitstream in the decoding unit, and generates the high-frequency component,
and the moving image decoding apparatus further
comprises a synthesizing unit that synthesizes the low-frequency component and the high-frequency component generated by the inverse-quantization/inverse-transformation unit.

3. The moving image decoding apparatus according to claim 2, wherein the synthesizing unit includes a filter bank for generating the block of the difference signal from the low-frequency component and the high-frequency component by an inverse transformation of the non-redundant transformation.

4. The moving image decoding apparatus according to claim 3, wherein the block of the difference signal generated by the synthesizing unit does not include a minimum size block.

5. The moving image decoding apparatus according to any one of claims 1 to 4, wherein
the resolution of the low-resolution image is a resolution obtained by dividing the resolution of the image by 2 to the power of n (where n is a natural number), and
the non-redundant transformation is a wavelet transform, and the low-frequency component is an LL component obtained as a result of n band divisions of the block of the difference signal.

6. A moving image decoding method, comprising:
entropy-decoding a bitstream corresponding to, out of a low-frequency component and a high-frequency component obtained as a result of non-redundantly transforming a block of a difference signal between an image and a prediction image into frequency components, the low-frequency component;
inverse-quantizing and inverse-transforming a level value obtained as a result of the entropy-decoding, and generating the low-frequency component; and
generating a block of a low-resolution image whose resolution is lower than the resolution of the image, from a block of the generated low-frequency component and a corresponding block of a prediction image.

7. A computer-readable storage medium comprising a program for causing a computer to function as the moving image decoding apparatus according to any one of claims 1 to 5.

8. A moving image encoding apparatus, comprising:
an analysis unit that non-redundantly transforms a block of a difference signal between an image and a prediction image into frequency components;
a transformation/quantization unit that, out of a low-frequency component and a high-frequency component obtained as a result of the transforming by the analysis unit, transforms and quantizes the low-frequency component, and generates a level value; and
an encoding unit that entropy encodes the level value generated by the transformation/quantization unit, and generates a bitstream.

9. The moving image encoding apparatus according to claim 8, wherein
the transformation/quantization unit transforms and quantizes the high-frequency component, and generates a different level value, and
the encoding unit entropy encodes the different level value generated by the transformation/quantization unit, and generates an accompanying bitstream.

10. The moving image encoding apparatus according to claim 8 or 9, wherein
the analysis unit includes a filter bank for generating the low-frequency component and the high-frequency component from the block of the difference signal.

11. The moving image encoding apparatus according to any one of claims 8 to 10, wherein the block of the difference signal inputted into the analysis unit does not include a minimum size block.

12. The moving image encoding apparatus according to any one of claims 8 to 11, wherein the non-redundant transformation is a wavelet transform, and the low-frequency component is an LL component obtained as a result of n (where n is a natural number) band divisions of the block of the difference signal.

13. A moving image encoding method, comprising:
non-redundantly transforming a block of a difference signal between an image and a prediction image into frequency components;
out of a low-frequency component and a high-frequency component obtained as a result of the transforming, transforming and quantizing the low-frequency component, and generating a level value; and
entropy encoding the generated level value, and generating a bitstream.

14. A computer-readable storage medium comprising a program for causing a computer to function as the moving image encoding apparatus according to any one of claims 8 to 12.
